# FASCICULE DE BREVET EUROPEEN

(11) **EP 2 598 869 B1**
(45) Date de publication et mention de la délivrance du brevet: **08.09.2021**
(21) Numéro de dépôt: 11752309.2
(22) Date de dépôt: 27.07.2011
(51) Int. Cl.: G01N 29/24, G01N 29/34, B06B 1/08, C23C 4/04, G01H 11/04

(54) **PROCÉDÉ DE PRÉPARATION D'UNE PIÈCE, BASÉE SUR LA FORMATION À SA SURFACE D'UN MATÉRIAU MAGNÉTOSTRICTIF**
VERFAHREN ZUR PRODUKTION EINES TEILS ANHAND DER HERSTELLUNG EINES MAGNETOSTRIKTIVEN MATERIALS AUF SEINER OBERFLÄCHE
METHOD FOR PREPARING A PART CONSISTING OF FORMING A MAGNETOSTRICTIVE MATERIAL AT THE SURFACE THEREOF

(30) Priorité: 27.07.2010 FR 1056182; 27.07.2010 FR 1056180
(43) Date de publication de la demande: 05.06.2013
(73) Titulaire: Association Institut De Soudure, 93420 Villepinte (FR)
(72) Inventeur: CHEHAIBOU, Abdelkrim, F-57070 Metz (FR); CHAUVEAU, Daniel, F-60300 Aumont En Halatte (FR); SCANDELLA, Fabrice, F-68240 Kaysersberg (FR)
(74) Mandataire: Cabinet Beau de Loménie
(86) Numéro de dépôt international: PCT/FR2011/051813
(87) Numéro de publication internationale: WO 2012/013900

(56) Documents cités:
- GB-A- 2 184 543
- JP-A- 8 210 931
- US-A- 4 760 745
- US-A1- 2007 113 684
- None

## Description

La présente invention concerne un procédé de préparation d'une pièce pour permettre son contrôle par ondes guidées produites par effet magnétostrictif.

Dans beaucoup d'industries, il est nécessaire de contrôler au stade de la fabrication mais aussi régulièrement en service des pièces afin d'y détecter dès que possible l'apparition de défauts (fissures, usure, endommagements, ...), car ces défauts sont susceptibles d'évoluer vers un stade critique où ils causeront la rupture de la pièce ou rendront celle-ci inutilisable.

Une grande variété de pièces peut faire l'objet d'une préparation selon l'invention, par exemple axe, moyeu, éléments de structures, plaques ou tôle, tubes, profilés, conduites, coques.

Par exemple, dans les industries pétrolière, chimique, ou nucléaire, il est nécessaire de contrôler tout particulièrement les conduites (tuyauteries, canalisations...). Il est possible pour cela d'effectuer un contrôle non destructif (par exemple visuel, par ultrasons, par rayons ionisants).

Dans de nombreux cas de tels contrôles ne sont en pratique pas réalisables car trop longs et coûteux, soit parce que la longueur totale des conduites à inspecter est trop importante (plusieurs centaines de kilomètres), soit parce que certaines de ces conduites sont difficiles d'accès (portions enterrées ou recouvertes d'isolant).

Une solution pour résoudre ce problème, que la canalisation soit ferromagnétique ou non consiste à générer des ondes (notamment ultrasonores) guidées à l'aide de l'effet magnétostrictif, car on peut ainsi contrôler aisément une grande longueur (plus de 30 mètres) d'une conduite à partir d'un seul emplacement. De plus la détection de défauts à la fois sur la surface externe et sur la surface interne de la conduite est possible.

L'effet magnétostrictif résulte de la propriété qu'ont les matériaux ferromagnétiques de modifier leurs dimensions lorsqu'ils sont soumis à des champs magnétiques. L'explication de l'effet magnétostrictif réside dans la structure d'un matériau ferromagnétique. Ces matériaux peuvent être considérés comme des ensembles de petites portions de matière, qui agissent comme des aimants permanents. Lorsque le matériau n'est pas magnétisé, ces petites portions se disposent dans l'espace de manière aléatoire ; dès que le matériau est magnétisé, elles orientent leur axe dans la même direction. L'intervention d'un champ magnétique extérieur entraîne une modification de cet équilibre et détermine l'effet magnétostrictif.

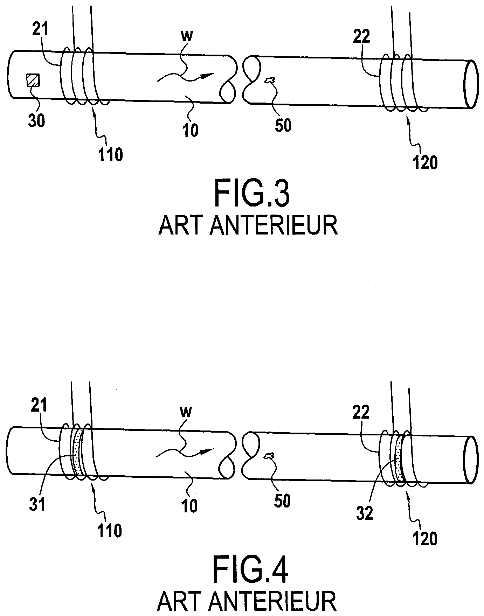

Le principe du fonctionnement et de l'utilisation des ondes guidées par effet magnétostrictif pour le contrôle d'une conduite est brièvement rappelé ci-après, en référence aux figures 3 et 4 qui représentent l'art antérieur.

On choisit l'exemple d'une conduite, mais la génération d'ondes guidées par effet magnétostrictif est également applicable à des pièces d'autres géométries comme évoqué précédemment.

On considère une conduite 10 ferromagnétique que l'on souhaite contrôler sur une certaine longueur (figure 3). On entend par conduite un tube creux, par exemple de section circulaire.

On génère en un premier emplacement 110 de la conduite 10 un champ magnétique. Cette génération peut s'effectuer par exemple en plaçant une première bobine 21 autour de la conduite à l'emplacement 110, et en faisant circuler dans cette première bobine 21 un courant pulsé. Le champ magnétique généré par la première bobine 21 modifie périodiquement, au premier emplacement 110, l'orientation magnétique des portions de matière du matériau ferromagnétique constituant la conduite 10, et génère une onde mécanique W dans la conduite 10 par déformation du matériau dans une direction parallèle à la direction du champ magnétique généré par la première bobine 21.

Cette onde mécanique W se propage le long de la conduite 10, et atteint un second emplacement 120 de la conduite 10, espacé du premier emplacement 110, où on a placé une seconde bobine 22. Cette onde mécanique W déforme périodiquement les portions de matière situées sous la seconde bobine 22, ce qui produit un courant électrique pulsé dont l'amplitude dépend de l'amplitude de l'onde mécanique W (effet magnétostrictif inverse).

Lorsque la conduite 10 présente un défaut 50, l'onde mécanique W interagit avec ce défaut 50 et est perturbée. L'onde mécanique perturbée W_{P}, lorsqu'elle atteint la seconde bobine 22, y est alors détectée par effet magnétostrictif inverse, ce qui matérialise la présence du défaut 50.

On peut effectuer le contrôle soit :
□ en transmission (cas décrit ci-dessus). Dans ce cas la première bobine 21 est émettrice et la seconde bobine 22 est réceptrice ou réciproquement. Les bobines 21 et 22 sont distantes l'une de l'autre et les défauts détectables sont situés préférentiellement entre les bobines.
□ en émission/réception. Dans ce cas la première bobine 21 est émettrice et la seconde bobine 22 est réceptrice ou réciproquement. Les bobines 21 et 22 sont proches l'une de l'autre (distance inférieure à la largeur d'une bobine) et les défauts détectables sont en général situés de part et d'autre des bobines.

Avantageusement, on magnétise le matériau ferromagnétique de la conduite 10 pendant toute la durée des mesures, par exemple en plaçant à son voisinage un aimant permanent 30 (ou un électroaimant). Ainsi, les bobines (21, 22) sont placées dans un champ magnétique permanent, et on améliore l'efficacité de l'effet magnétostrictif.

Lorsque la conduite 10, ou plus généralement la pièce à contrôler, est réalisée dans un matériau qui n'est pas ferromagnétique, c'est-à-dire qui ne s'aimante pas lorsqu'il est placé dans un champ magnétique, il est cependant encore possible d'utiliser le procédé ci-dessus. Pour cela, on colle un premier ruban 31 en matériau magnétostrictif (par exemple en nickel) sur la conduite 10 au premier emplacement 110, et on entoure ce premier ruban 31 par la première bobine 21 sans contact (figure 4). Ce ruban procure un effet magnétostrictif. De même, on colle un second ruban 32 en matériau magnétostrictif sur la conduite 10 au second emplacement 120, et on l'entoure par la seconde bobine 22 sans contact.

Il est nécessaire d'utiliser une colle, par exemple de type époxy, afin de bien solidariser les rubans 31, 32 sur la conduite 10 et d'obtenir une surface de contact optimale.

Les bobines 21, 22 ne sont pas en contact avec les rubans 31, 32, et peuvent ainsi être aisément enlevées ou déplacées.

Le champ magnétique généré par la première bobine 21 modifie l'aimantation dans le premier ruban 31, qui se déforme et génère une onde mécanique W qui se propage dans le matériau de la conduite 10.

Cette onde mécanique W atteint le second ruban 32 dans laquelle elle induit une modification du champ magnétique (effet magnétostrictif inverse). Le champ magnétique dans la seconde bobine 22 entourant le second ruban 32 est alors modifié, ce qui induit à son tour un courant électrique dans cette seconde bobine 22, qui peut alors être détecté et analysé.

Dans certains cas, les rubans 31, 32 de matériau magnétostrictif peuvent également être utilisées sur un tube ou pièce en matériau ferromagnétique, car cela permet d'atteindre la même efficacité de transfert d'énergie entre l'onde mécanique W et le courant électrique dans les bobines que si l'on place des aimants permanents 30 au voisinage du tube.

D'autres exemples de l'art antérieur sont décrits dans les documents US 2007/0113684, JP8210931, GB2184543 et US4760745. Dans US 2007/0113684 on décrit une pièce présentant sur sa surface deux bandes parallèles situées l'une sous une première bobine et l'autre sous une deuxième bobine, chacune d'un côté de la pièce testée; chacune des deux bandes peut être continue ou discontinue (étant constituée de segments alignés entre eux le long d'une courbe).

Cependant, l'utilisation de rubans magnétostrictifs sur des pièces (par exemple tubes, tôle, profilés) présente plusieurs inconvénients ou limitations. En effet, les rubans peuvent être endommagés lors des manutentions ou empilage des pièces semi-finies, ou enroulement de ces pièces. En outre ces rubans sont minces et sont susceptibles de se dégrader dans le temps.

De plus les colles utilisées pour coller les rubans sur la surface des pièces se dégradent avec le temps, ce qui entraine un décollement des rubans et diminue l'efficacité du dispositif de mesure pour contrôler les pièces en service. Ces colles ne sont en outre pas utilisables dans des conditions sévères, par exemple dans des environnements où la température est supérieure à 150°C.

La présente invention vise à remédier à ces inconvénients.

L'invention, définie par la revendication 1, vise à proposer un procédé de préparation de la pièce qui permette de réaliser le contrôle d'une pièce, ferromagnétique ou non, par ondes guidées ultrasonores produites par effet magnétostrictif de façon fiable et durable, même dans des conditions environnementales sévères, et sans qu'il soit nécessaire de placer au voisinage de la pièce un aimant (voir ci-dessus).

Ce but est atteint grâce au fait que la pièce présente sur une première portion de sa surface, après préparation, deux bandes élémentaires parallèles rapprochées, seulement une des bandes étant discontinue, chacune des bandes possédant des propriétés magnétostrictives.

Grâce à ces dispositions, il ne se produit pas de décollement, ni de perte de caractéristique du matériau magnétostrictif avec le temps. De plus, le fait qu'une des bandes soit discontinue permet d'obtenir des informations supplémentaires sur la position, géométrie du ou des défauts détectés et par conséquent d'optimiser la détection de ces défauts.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1A représente une conduite sur laquelle un matériau de revêtement est déposé selon le premier mode de réalisation de l'invention en deux bandes parallèles dont une est discontinue,
- la figure 1B représente une conduite sur laquelle un matériau de revêtement est déposé selon un exemple utile à la compréhension de l'invention en deux bandes parallèles et discontinues,
- la figure 2A représente une conduite dont la portion altérée selon le deuxième mode de réalisation de l'invention forme deux bandes parallèles dont une est discontinue,
- la figure 2B représente une conduite dont la portion altérée selon un exemple utile à la compréhension de l'invention forme deux bandes parallèles et discontinues,
- la figure 3 représente une conduite ferromagnétique qui est contrôlée par un procédé de génération d'ondes guidées selon l'art antérieur utilisant l'effet magnétostrictif,
- la figure 4 représente une conduite qui est contrôlée par un procédé de génération d'ondes guidées selon l'art antérieur utilisant l'effet magnétostrictif.

Le procédé selon l'invention est décrit ci-dessous dans le cas où la pièce à préparer et à contrôler est une conduite 10 tubulaire. Cette conduite 10 peut avoir une section quelconque (cercle, polygone).

Cependant ce procédé peut être utilisé pour contrôler une pièce de n'importe quelle géométrie, par exemple un axe plein, une plaque ou une coque.

Dans le procédé de préparation de la pièce selon l'invention on forme sur une première portion 11 de la surface de cette pièce 10 deux bandes élémentaires parallèles rapprochées, une des bandes (la première bande 41a) étant discontinue, chacune des bandes possédant des propriétés magnétostrictives. La deuxième bande 41b est continue et s'étend sur la totalité d'une circonférence de la conduite 10.

On décrit tout d'abord le premier mode de réalisation de l'invention.

Le matériau de la conduite 10 peut être ferromagnétique ou non. On dépose par projection une première couche de poudre de matériau magnétostrictif formant une première bande discontinue 41a et une deuxième bande 41b sur une première portion 11 de la surface de la conduite 10.

Cette opération de projection peut s'effectuer par exemple avec un des procédés connus listés ci-dessous, dont les caractéristiques sont brièvement rappelées :
□ projection dynamique à froid (en anglais "cold spray") : on injecte une poudre dans un flux de gaz (idéalement un gaz inerte tel que Ar ou He pour éviter l'oxydation des particules de poudre, ou un gaz actif tel que N₂) de vitesse supersonique dirigé sur la surface de la pièce à revêtir. La température du gaz est suffisamment basse (généralement entre 250°C et 650 °C) pour empêcher la fusion des particules de poudre pendant leur temps de séjour dans le flux gazeux. Les particules impactent donc la surface de la pièce sous forme de poudre solide, ce qui évite l'oxydation des particules et l'apparition de gaz inclus.
□ projection thermique : il existe différentes techniques de projection (la projection à chaud à la flamme, la projection par arc-fil, la projection HVOF ("High Velocity Oxygen Fuel" en anglais, ou "oxygène carburant haute vélocité"), la projection PTA ou plasma à arc transféré, la projection par laser poudre, la projection par canon à détonation). La température acquise par les particules lors de la projection est plus élevée (supérieure à 2500 °C) que dans le cas de la projection dynamique à froid (la vitesse acquise par les particules restant subsonique), ce qui entraine une fusion des particules. Les particules impactent donc la surface de la pièce sous forme de gouttelettes liquides. Dans le cas de la projection par arc-fil, le matériau est initialement sous forme d'un fil, mais est chauffé par arc électrique au sein du pistolet de projection de telle sorte que le matériau quitte ce pistolet sous forme de gouttelettes.
□ Projection de particules dans un liant : les particules magnétostrictives sont sous forme solide, et baignent dans un liant. On obtient ainsi une peinture. Cette peinture est ensuite projetée sur la surface de la pièce, le liant permettant une adhésion des particules sur la surface de la pièce

Quel que soit le procédé utilisé pour le dépôt, l'adhésion des particules de poudre 40 ou des gouttelettes sur la surface de la conduite 10 est suffisante pour permettre leur solidarisation pérenne avec la surface de la conduite 10.

Dans tous les cas, il ne se produit pas de fusion du matériau de la pièce, même au niveau du lieu d'impact.

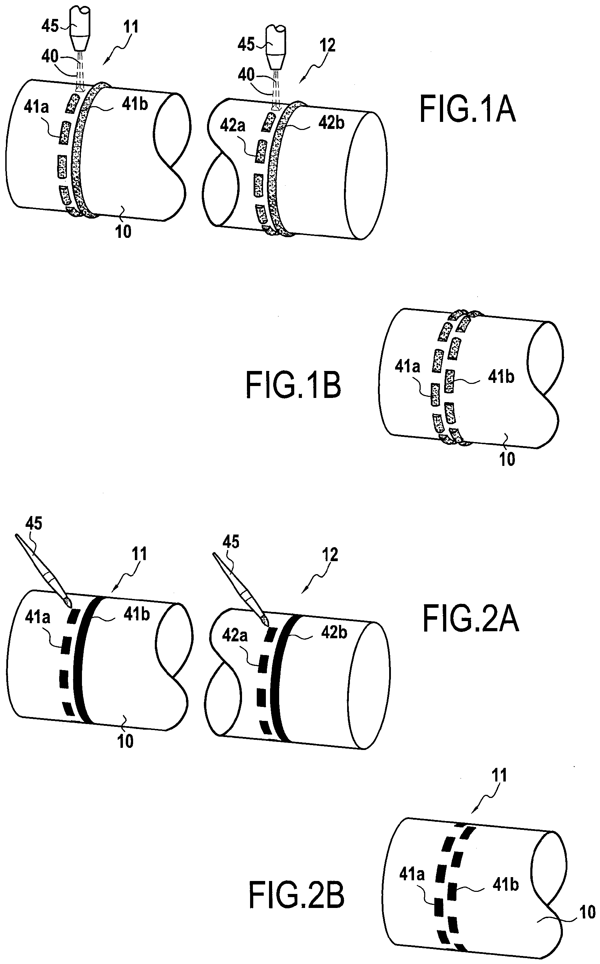

Dans le cas de la projection dynamique à froid, le dépôt de la première couche s'effectue en projetant à l'aide d'une buse 45, sur la première portion 11 de la surface de la conduite 10, de la poudre 40 d'un matériau de revêtement magnétostrictif (matériau sous forme pulvérulente), ce qui est illustré sur la figure 1A. Les grains de poudre ont par exemple une taille comprise entre 1 µm et 100 µm.

Cette adhésion résulte d'une liaison mécanique et/ou par diffusion d'éléments chimiques ou par fusion partielle du substrat c'est à dire par dilution des particules de poudre 40 avec le matériau constituant la conduite 10. Elle permet une transmission fiable des déformations entre la première couche et la conduite 10 dues à l'effet magnétostrictif.

Selon l'invention, la première bande 41a de la première couche est discontinue et la deuxième bande 41 b de la première couche est continue, comme représenté sur la figure 1A.

Le matériau de revêtement peut être déposé le long d'au moins une partie d'une circonférence de la conduite 10.

Par exemple cette circonférence s'étend dans un plan perpendiculaire à l'axe longitudinal de la conduite 10.

Avantageusement, lorsque la deuxième bande 41b de la première couche est continue, le matériau de revêtement 40 ayant été déposé sur la totalité de la circonférence, comme représenté sur la figure 1A, cette deuxième bande 41b se déforme de façon identique en tout point autour de la conduite 10.

D'une manière générale dans le cas d'une pièce de forme quelconque, le matériau de revêtement 40 formant la deuxième bande 41b est avantageusement déposé en une couche dont les extrémités se rejoignent après avoir fait le tour de la pièce. Cette couche forme alors une bande continue entourant la pièce.

On peut également ménager un faible espace entre les extrémités de cette bande, de l'ordre du mm, pour une meilleure efficacité de l'effet magnétostrictif.

On entoure ensuite la première bande 41a et la deuxième bande 41b de cette première couche par une première bobine 21 sans contact (non représentée), c'est-à-dire qu'il n'y a pas de contact entre la première couche et la première bobine 21. Cette première bobine 21 génère un champ magnétique. Sous l'effet de ce champ, le matériau magnétostrictif va générer une onde mécanique apte à se propager dans la conduite 10.

Ces deux bandes élémentaires 41a et 41b sont suffisamment rapprochées pour être situées toutes les deux sous la première bobine 21.

Ces bandes élémentaires sont espacées d'une distance au plus égale à la largeur d'une des bandes.

Cette configuration, représentée sur la figure 1A pour la première couche et pour la deuxième couche (voir ci-dessous), permet d'obtenir des précisions supplémentaires concernant le sens de provenance de l'onde mécanique.

Cette segmentation peut être réalisée en appliquent au préalable un masque sur la pièce, ce masque ayant les propriétés requises pour résister au procédé de projection utilisé.

Cette disposition en segments permet d'optimiser la détection et d'obtenir des informations supplémentaires sur la position, géométrie du ou des défauts détectés.

Le matériau de revêtement 40 peut être déposé sur la face externe ou sur la face interne de la conduite 10 (ou de la pièce si cette pièce possède une face interne), ou à une de ses extrémités.

De même, on dépose sur une seconde portion 12 de la surface de la pièce 10, espacée de la première portion 11, une seconde couche de poudre 40 de matériau magnétostrictif, selon l'un des procédés décrits ci-dessus, cette seconde couche formant une première bande discontinue 42a et une deuxième bande 42b qui est continue.

On entoure ensuite la première bande 42a et la deuxième bande 42b de cette seconde couche par une seconde bobine 22 sans contact (non représentée).

L'utilisation de deux ensembles (dans cet exemple exploités en transmission) comprenant chacun une couche de matériau magnétostrictif et une bobine (21, 22), placés à deux endroits espacés sur la conduite 10 permet de repérer et d'estimer certaines caractéristiques des défauts 50 présents dans le matériau de la conduite.

Ces deux ensembles peuvent également être exploités en émission/réception, comme expliqué plus haut.

En variante non revendiquée, le matériau de revêtement peut être déposé le long d'une droite sur la pièce 10, par exemple le long d'une génératrice dans le cas d'une pièce cylindrique, la génératrice s'étendant selon l'axe longitudinal de cette pièce 10.

Dans tous les cas, la composition métallurgique du matériau de la poudre est telle que sa réponse magnétostrictive est suffisante en fonction de la nature du matériau à contrôler et de la distance de propagation des ondes à atteindre tout en assurant une bonne cohésion du dépôt de poudre et de son adhérence sur la conduite.

Par exemple, en fonction de la nature du matériau de la pièce à contrôler, on peut utiliser soit un mélange de poudre d'éléments métallurgiques ou chimiques réalisé préalablement au dépôt dans des proportions données, soit réduire en poudre un alliage ou un mélange chimique et utiliser cette poudre pour effectuer le dépôt. Le choix de la poudre est à adapter au mode de dépôt.

On peut par exemple avec le procédé "Cold spray" utiliser de la poudre de nickel ou de cobalt quasi pur (98% en teneur), ou un mélange de poudre pour avoir un bon effet magnétostrictif par exemple un mélange de nickel et de cobalt, notamment {4% Ni + 96% Co}, ou un mélange de fer et d'aluminium, notamment {Fe 13% + Al 87%}, ou un mélange de fer, de cobalt et de vanadium {49% Fe + 49% Co + 2% V}.

L'ajout de terres rares dans la composition de la poudre permet également de renforcer l'effet magnétostrictif. On peut également utiliser de la poudre d'alliage connu pour ses propriétés magnétostrictives (tels que terfenol®, terfenol-D®), des oxydes (tels que la magnétite), de la ferrite, ou des carbures métalliques.

L'inventeur a constaté que les propriétés magnétostrictives du matériau déposé peuvent être optimisées, ou exaltées (c'est-à-dire rendues actives):
□ en soumettant le matériau de revêtement, après ou pendant son dépôt, à un champ magnétique, ou
□ en effectuant un traitement thermique local du matériau déposé ou de l'ensemble de la pièce, ou
□ en appliquant un champ magnétique pendant ce traitement thermique.

On décrit maintenant le deuxième mode de réalisation de l'invention, dans le cas où la pièce à préparer et à contrôler est une conduite 10 tubulaire.

On altère la première portion 11 de la pièce 10 de façon à former chacune des bandes élémentaires, la première bande 41a étant discontinue, la seconde bande 41b étant continue, comme représenté en figure 2A.

Le matériau de la conduite 10 (ou plus généralement de la pièce à contrôler) est métallique, et peut être ferromagnétique ou non.

Cette altération peut s'effectuer par exemple avec un des procédés connus listés ci-dessous, dont les caractéristiques sont brièvement rappelées :
□ altération thermique : l'oxydation. On soumet la première portion 11 à un traitement thermique (par exemple à l'aide d'une résistance chauffante) qui provoque une oxydation du matériau de la conduite en cette première portion 11.
□ altération thermique : la carburation. La carburation (formation d'un carbure) est également effectuée par un traitement thermique, par exemple sur les alliages de titane.
□ altération thermique : la nitruration. La nitruration (formation d'un nitrure) est également effectuée par un traitement thermique.
□ altération chimique : on place une première portion 11 de la surface en contact avec un produit chimique, par exemple en badigeonnant cette première portion 11 avec un pinceau préalablement trempé dans ce produit chimique. Ce produit chimique peut par exemple provoquer une oxydation de la pièce.
□ altération par électrolyse : on place une première portion 11 de la surface de la conduite 10 et une électrode en contact avec un électrolyte, on relie la conduite et l'électrode avec un générateur par des fils électriques à l'extérieur de l'électrolyte, puis on fait passer un courant entre la conduite et l'électrode par ces fils grâce au générateur. Il se produit alors un courant d'électrons dans ces fils depuis l'anode vers la cathode, ce qui induit, au sein de l'électrolyte, un courant d'ions négatifs vers l'anode, et un courant d'ions positifs vers la cathode. Ces ions négatifs ou positifs se déposent donc sur la première portion 11 selon qu'elle soit anode ou cathode respectivement, ce qui modifie chimiquement cette première portion 11.
□ implantation ionique : on utilise une source de production d'ions, par exemple un gaz chauffé, puis on accélère ces ions au moyen de leur charge électronique et on en bombarde une première portion 11 de la surface de la conduite 10. La conduite 10 est préalablement soumise à une charge opposée à celle des ions de façon à attirer ces derniers. Ces ions pénètrent dans la surface sur une épaisseur qui dépend de leur énergie, et modifient sur cette épaisseur les propriétés chimiques de la surface et également ses propriétés structurelles (par modification du réseau cristallin du matériau constituant la surface).

Dans tous les cas, on altère donc les propriétés chimiques et éventuellement structurelles de la première portion 11 de la surface de la pièce, de façon à conférer à cette portion des propriétés magnétostrictives.

Dans le cas de l'altération chimique, l'altération s'effectue en en badigeonnant la première portion 11 de la surface de la conduite 10 avec un pinceau 45 préalablement trempé dans un produit chimique 40, ce qui est illustré sur la figure 2A.

L'altération peut être effectuée le long d'au moins une partie d'une circonférence de la conduite 10.

Par exemple cette circonférence s'étend dans un plan perpendiculaire à l'axe longitudinal de la conduite 10.

Avantageusement, lorsque la deuxième bande 41b de la première couche est continue, l'altération ayant été effectuée sur la totalité de la circonférence, comme représenté sur la figure 2A, cette deuxième bande 41b se déforme de façon identique en tout point autour de la conduite 10.

D'une manière générale dans le cas d'une pièce de forme quelconque, l'altération formant la deuxième bande 41b peut être effectuée sur une portion dont les extrémités se rejoignent après avoir fait le tour de la pièce. Cette portion forme alors une bande continue entourant la pièce.

On peut également ménager un faible espace entre les extrémités de cette bande, de l'ordre du mm, pour une meilleure efficacité de l'effet magnétostrictif.

On entoure ensuite la première bande 41a et la deuxième bande 41b de cette première couche par une première bobine 21 sans contact (non représentée), c'est-à-dire qu'il n'y a pas de contact entre cette portion altérée et la première bobine 21. Cette première bobine 21 génère un champ magnétique. Sous l'effet de ce champ, le matériau magnétostrictif va générer une onde mécanique apte à se propager dans la conduite 10.

Ces deux bandes élémentaires 41a et 41b sont suffisamment rapprochées pour être situées toutes les deux sous la première bobine 21.

Ces bandes élémentaires sont espacées d'une distance au plus égale à la largeur d'une des bandes.

Cette configuration, représentée sur la figure 2A pour la première couche et pour la deuxième couche (voir ci-dessous), permet d'obtenir des précisions supplémentaires concernant le sens de provenance de l'onde mécanique.

Cette segmentation peut être réalisée en appliquent au préalable un masque sur la pièce, ce masque ayant les propriétés requises pour résister au procédé de projection utilisé.

Cette disposition en segments permet d'optimiser la détection et d'obtenir des informations supplémentaires sur la position, géométrie du ou des défauts détectés.

L'altération peut être effectuée sur la face externe ou sur la face interne de la conduite 10 (ou de la pièce si cette pièce possède une face interne), ou à une de ses extrémités.

De même, on altère une seconde portion 12 de la surface de la pièce 10, espacée de la première portion 11, de façon à lui conférer un effet magnétostrictif, selon l'un des procédés décrits ci-dessus, cette seconde couche formant une première bande discontinue 42a et une deuxième bande 42b qui peut être continue, comme représenté en figure 2A, ou discontinue.

On entoure ensuite la première bande 42a et la deuxième bande 42b de cette seconde couche par une seconde bobine 22 sans contact (non représentée).

L'utilisation de deux ensembles (dans cet exemple exploités en transmission) comprenant chacun une région altérée (11, 12) magnétostrictive et une bobine (21, 22), placés à deux endroits espacés sur la conduite 10 permet de repérer et d'estimer certaines caractéristiques des défauts 50 présents dans le matériau de la conduite.

Ces deux ensembles peuvent également être exploités en émission/réception, comme expliqué plus haut.

En variante non revendiquée, l'altération peut être effectuée le long d'une droite sur la pièce, par exemple le long d'une génératrice dans le cas d'une pièce cylindrique, la génératrice s'étendant selon l'axe longitudinal de cette pièce.

Dans le procédé selon l'invention, lorsqu'on utilise un traitement thermique, l'altération est effectuée de telle sorte que la portion de la surface qui est altérée présente après altération des propriétés magnétostrictives.

Par exemple, pour un acier, on peut chauffer puis refroidir cette première portion 11 pour y privilégier la formation de magnétite (Fe₃O₄) au détriment des autres oxydes de fer (wüstite (Fe₁₋ₓO), hématite (Fe₂O₃),), ce qui revient à une oxydation de l'acier. Ainsi, le cycle utilisé pour un acier ferrito-perlitique ayant un carbone équivalent inférieur à 0,2 est par exemple un chauffage à 900°C sous vide (pression inférieure à 3 Pa), suivi d'un maintien à cette température pendant 45 minutes, suivi d'une trempe à l'air.

Dans le procédé selon l'invention, lorsqu'on utilise un traitement chimique, l'altération est effectuée de telle sorte que la portion de la surface qui est altérée présente après altération des propriétés magnétostrictives.

Par exemple, pour un acier, on peut utiliser une solution composée de sulfate de cuivre, d'alcool, de perchlorure de fer, d'acide nitrique, d'éther sulfurique, et d'eau. En particulier, cette solution peut être composée 60 à 90 g (grammes) de sulfate de cuivre, de 30 à 50 g d'alcool, de 25 à 50 g de perchlorure de fer, de 10 à 40 g d'acide nitrique, de 10 à 40 g d'éther sulfurique, et de 300 à 600 g d'eau.

Dans le procédé selon l'invention, lorsqu'on utilise l'électrolyse, cette électrolyse est effectuée de telle sorte que la portion de la surface qui est altérée présente des propriétés magnétostrictives.

Dans le procédé selon l'invention, lorsqu'on utilise l'implantation ionique, cette implantation est effectuée de telle sorte que la portion de la surface où les ions sont implantés présente des propriétés magnétostrictives.

Dans des variantes non revendiquées, l'altération peut également être effectuée sur toute la pièce, par exemple en plaçant la pièce dans un four dans le cas d'un traitement thermique, ou en trempant la pièce dans un produit chimique.

L'inventeur a constaté que les propriétés magnétostrictives de la portion altérée de la surface de la pièce peuvent être optimisées, ou exaltées (c'est-à-dire rendues actives):
□ en soumettant cette portion, après ou pendant son altération, à un champ magnétique, ou
□ en effectuant un traitement thermique local de la portion altérée ou de l'ensemble de la pièce, ou
□ en appliquant un champ magnétique pendant ce traitement thermique.

L'invention concerne également une pièce obtenue selon un procédé selon l'invention tel que décrit ci-dessus.

## Revendications

1. Procédé de préparation d'une pièce (10) pour permettre son contrôle par ondes guidées produites par effet magnétostrictif, ladite pièce (10) présentant après la préparation sur une première portion (11) de sa surface deux bandes élémentaires (41a, 41b) parallèles et rapprochées, de sorte que ces bandes élémentaires (41a, 41b) sont espacées d'une distance au plus égale à la largeur d'une des bandes élémentaires (41a, 41b), une desdites bandes (41a) étant discontinue et étant constituée de segments alignés entre eux le long d'une courbe, et l'autre desdites bandes (41b) étant continue, chacune desdites bandes (41a, 41b) possédant des propriétés magnétostrictives.

2. Procédé de préparation d'une pièce (10) selon la revendication 1 **caractérisé en ce qu'**on dépose par projection un matériau magnétostrictif (40) de revêtement sur ladite première portion (11) de façon à former chacune desdites bandes (41a, 41b).

3. Procédé de préparation d'une pièce (10) selon la revendication 2 **caractérisé en ce que** ledit matériau impacte la surface de la pièce sous forme de poudre.

4. Procédé de préparation d'une pièce (10) selon la revendication 3 **caractérisé en ce que** le dépôt dudit matériau de revêtement (40) est effectué par projection dynamique à froid.

5. Procédé de préparation d'une pièce (10) selon la revendication 2 **caractérisé en ce que** ledit matériau impacte la surface de la pièce sous forme de gouttelettes.

6. Procédé de préparation d'une pièce (10) selon la revendication 5 **caractérisé en ce que** le dépôt dudit matériau de revêtement (40) est effectué par projection thermique.

7. Procédé de préparation d'une pièce (10) selon la revendication 6 **caractérisé en ce que** ladite projection thermique s'effectue par un procédé choisi dans le groupe comprenant la projection à chaud à la flamme, la projection par arc-fil, la projection HVOF, la projection par plasma à arc transféré, la projection par laser poudre, la projection par canon à détonation.

8. Procédé de préparation d'une pièce (10) selon la revendication 2 **caractérisé en ce que** le dépôt dudit matériau de revêtement (40) est effectué par projection de particules dans un liant.

9. Procédé de préparation d'une pièce (10) selon la revendication 1 **caractérisé en ce que** ladite pièce est métallique et **en ce qu'**on altère ladite première portion (11) de façon à former chacune desdites bandes (41a, 41b).

10. Procédé de préparation d'une pièce (10) selon la revendication 9 **caractérisé en ce que** ladite altération s'effectue par un procédé choisi dans le groupe comprenant un traitement thermique tel que l'oxydation, la carburation, la nitruration, un traitement chimique tel que l'oxydation, une électrolyse, une implantation ionique.

11. Procédé de préparation d'une pièce (10) selon l'une quelconque des revendications 1 à 10 **caractérisé en ce que** ladite pièce (10) est une conduite tubulaire.

12. Procédé de préparation d'une pièce (10) selon l'une quelconque des revendications précédentes **caractérisé en ce que** ladite pièce (10) est soumise, après ou pendant sa préparation, à un champ magnétique.

13. Procédé de préparation d'une pièce (10) selon l'une quelconque des revendications précédentes **caractérisé en ce que** ladite pièce (10) est soumise, après ou pendant sa préparation, à un traitement thermique.

14. Pièce (10) obtenue par un procédé selon l'une quelconque des revendications précédentes.

## Patentansprüche

1. Verfahren zur Herstellung eines Teils (10), um seine Prüfung mittels geführter Wellen, die durch magnetostriktiven Effekt erzeugt werden, zu ermöglichen, wobei das Teil (10) nach der Herstellung auf einem ersten Abschnitt (11) seiner Oberfläche zwei parallele und einander genäherte Einzelstreifen (41a, 41b) aufweist, so dass diese Einzelstreifen (41a, 41b) um einen Abstand beabstandet sind, der höchstens gleich der Breite von einem der Einzelstreifen (41a, 41b) ist, wobei einer der Streifen (41a) unterbrochen ist und aus Segmenten besteht, die entlang einer Kurve untereinander ausgerichtet sind, und wobei der andere der Streifen (41b) durchgehend ist, wobei jeder der Streifen (41a, 41b) magnetostriktive Eigenschaften besitzt.

2. Verfahren zur Herstellung eines Teils (10) nach Anspruch 1, **dadurch gekennzeichnet, dass** ein magnetostriktives Material (40) zum Beschichten auf den ersten Abschnitt (11) durch Spritzen abgeschieden wird, um jeden der Streifen (41a, 41b) zu bilden.

3. Verfahren zur Herstellung eines Teils (10) nach Anspruch 2, **dadurch gekennzeichnet, dass** das Material in Form von Pulver auf die Oberfläche des Teils auftrifft.

4. Verfahren zur Herstellung eines Teils (10) nach Anspruch 3, **dadurch gekennzeichnet, dass** die Abscheidung des Beschichtungsmaterials (40) durch dynamisches Kaltspritzen vollzogen wird.

5. Verfahren zur Herstellung eines Teils (10) nach Anspruch 2, **dadurch gekennzeichnet, dass** das Material in Form von Tröpfchen auf die Oberfläche des Teils auftrifft.

6. Verfahren zur Herstellung eines Teils (10) nach Anspruch 5, **dadurch gekennzeichnet, dass** die Abscheidung des Beschichtungsmaterials (40) durch thermisches Spritzen vollzogen wird.

7. Verfahren zur Herstellung eines Teils (10) nach Anspruch 6, **dadurch gekennzeichnet, dass** das thermische Spritzen mittels eines Verfahrens erfolgt, das aus der Gruppe umfassend Heiß-Flammspritzen, Lichtbogenspritzen, HVOF-Spritzen, Plasma-Lichtbogenspritzen, Laserspritzen, Detonationsspritzen ausgewählt ist.

8. Verfahren zur Herstellung eines Teils (10) nach Anspruch 2, **dadurch gekennzeichnet, dass** die Abscheidung des Beschichtungsmaterials (40) durch Spritzen von Partikeln in einem Bindemittel vollzogen wird.

9. Verfahren zur Herstellung eines Teils (10) nach Anspruch 1, **dadurch gekennzeichnet, dass** das Teil metallisch ist und dass der erste Abschnitt (11) verändert wird, um einen jeden der Streifen (41a, 41b) zu bilden.

10. Verfahren zur Herstellung eines Teils (10) nach Anspruch 9, **dadurch gekennzeichnet, dass** die Änderung durch ein Verfahren erfolgt, das aus der Gruppe umfassend eine Wärmebehandlung wie Oxidation, Aufkohlen, Nitrieren, eine chemische Behandlung wie Oxidation, eine Elektrolyse, eine Ionenimplantation ausgewählt ist.

11. Verfahren zur Herstellung eines Teils (10) nach einem der Ansprüche 1 bis 10, **dadurch gekennzeichnet, dass** das Teil (10) eine Rohrleitung ist.

12. Verfahren zur Herstellung eines Teils (10) nach einem der vorhergehenden Ansprüche, **dadurch gekennzeichnet, dass** das Teil (10) nach oder während seiner Herstellung einem Magnetfeld ausgesetzt wird.

13. Verfahren zur Herstellung eines Teils (10) nach einem der vorhergehenden Ansprüche, **dadurch gekennzeichnet, dass** das Teil (10) nach oder während seiner Herstellung einer Wärmebehandlung unterzogen wird.

14. Teil (10), das durch ein Verfahren nach einem der vorhergehenden Ansprüche erhalten wird.

## Claims

1. A method for preparing a part (10) to allow its control by guided waves produced by magnetostrictive effect, said part (10) having, after preparation on a first portion (11) of its surface, two elementary strips (41a, 41b) parallel to each other and brought together, so that these elementary strips (41a, 41b) are spaced by a distance at most equal to the width of one of the elementary strips (41a, 41b), one of said strips (41a) being discontinuous and consisting of segments aligned with each other along a curve, and the other of said strips (41b) being continuous, each of said strips (41a, 41b) having magnetostrictive properties.

2. The method for preparing a part (10) according to claim 1 **characterized in that** a magnetostrictive coating material (40) is spray-deposited on said first portion (11) is so as to form each of said strips (41a, 41b).

3. The method for preparing a part (10) according to claim 2 **characterized in that** said material impacts the surface of the part in the form of powder.

4. The method for preparing a part (10) according to claim 3 **characterized in that** the deposition of said coating material (40) is carried out by dynamic cold spray.

5. The method for preparing a part (10) according to claim 2 **characterized in that** said material impacts the surface of the part in the form of droplets.

6. The method for preparing a part (10) according to claim 5 **characterized in that** the deposition of said coating material (40) is carried out by thermal spray.

7. The method for preparing a part (10) according to claim 6 **characterized in that** said thermal spray is carried out by a method chosen from the group comprising hot flame spray, arc-wire spray, HVOF spray, transferred arc plasma spray, powder laser spray, detonation gun spray.

8. The method for preparing a part (10) according to claim 2 **characterized in that** the deposition of said coating material (40) is carried out by spray of particles in a binder.

9. The method for preparing a part (10) according to claim 1 **characterized in that** said part is metallic and **in that** said first portion (11) is altered so as to form each of said strips (41a, 41b).

10. The method for preparing a part (10) according to claim 9 **characterized in that** said alteration is carried out by a method chosen from the group comprising a heat treatment such as oxidation, carburization, nitriding, a chemical treatment such as oxidation, an electrolysis, an ion implantation.

11. The method for preparing a part (10) according to any one of claims 1 to 10 **characterized in that** said part (10) is a tubular pipe.

12. The method for preparing a part (10) according to any one of the preceding claims, **characterized in that** said part (10) is subjected, after or during its preparation, to a magnetic field.

13. The method for preparing a part (10) according to any one of the preceding claims, **characterized in that** said part (10) is subjected, after or during its preparation, to a heat treatment.

14. A part (10) obtained by a method according to any one of the preceding claims.
